(19) Europäisches Patentamt
European Patent Office
Office européen des brevets

(11) EP 4 502 045 A1

(12) EUROPEAN PATENT APPLICATION
published in accordance with Art. 153(4) EPC

(43) Date of publication:
**05.02.2025 Bulletin 2025/06**

(21) Application number: **23779565.3**

(22) Date of filing: **14.03.2023**

(51) International Patent Classification (IPC):
***C08L 27/12*** *(2006.01)* ***C08K 3/04*** *(2006.01)*
***C08K 3/28*** *(2006.01)* ***C08K 3/34*** *(2006.01)*
***C08K 5/57*** *(2006.01)* ***C09K 3/10*** *(2006.01)*

(52) Cooperative Patent Classification (CPC):
**C08K 3/04; C08K 3/28; C08K 3/34; C08K 5/57; C08L 27/12; C09K 3/10**

(86) International application number:
**PCT/JP2023/009871**

(87) International publication number:
**WO 2023/189547 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 JP 2022059007**

(71) Applicant: **DAIKIN INDUSTRIES, LTD.**
**Osaka-shi, Osaka 530-0001 (JP)**

(72) Inventors:
- **KAMIYA, Fumihiro**
  **Osaka-Shi, Osaka 530-0001 (JP)**
- **OTA, Daisuke**
  **Osaka-Shi, Osaka 530-0001 (JP)**
- **NOGUCHI, Tsuyoshi**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

# (54) COMPOSITION, CROSSLINKED PRODUCT, AND SEALING MATERIAL

(57) Provided is a composition comprising a perfluoroelastomer and a filler, wherein the filler contains silicon carbide and graphite, and a ratio (area (C)/area (SiC)) of an area (C) of a peak derived from the graphite in the filler to an area (SiC) of a peak derived from the silicon carbide in the filler is 0.7 or more.

EP 4 502 045 A1

## Description

### TECHNICAL FIELD

The present disclosure relates to a composition, a crosslinked product, and a sealing material.

### BACKGROUND ART

Perfluoroelatomers are excellent in terms of sealability and heat resistance and are thus in use as materials of sealing materials. Since plasma resistance is required for sealing materials that are used for semiconductor manufacturing apparatuses, techniques of imparting plasma resistance to sealing materials by adding a filler to a perfluoroelastomer are known.

For example, Patent Document 1 discloses a crosslinkable elastomer composition composed of a crosslinkable elastomer and a non-oxide ceramic such as a carbide or a nitride.

Patent Document 2 discloses a crosslinkable fluorine-containing elastomer composition containing a crosslinkable fluorine-containing elastomer and silicon carbide particles having a bulk density of 0.15 g/$cm^3$ or less.

### RELATED ART

### PATENT DOCUMENTS

Patent Document 1: International Publication No. WO 03/051999
Patent Document 2: Japanese Translation of PCT International Application Publication No. 2012-509975

### SUMMARY OF THE INVENTION

### PROBLEM TO BE SOLVED BY THE INVENTION

An object of the present disclosure is to provide a composition capable of providing a crosslinked product having excellent plasma resistance and excellent compression set resistance.

### MEANS FOR SOLVING THE PROBLEM

The present disclosure provides a composition comprising a perfluoroelastomer and a filler, wherein the filler contains silicon carbide and graphite, and a ratio (area (C)/area (SiC)) of an area (C) of a peak derived from graphite in the filler to an area (SiC) of a peak derived from silicon carbide in the filler is 0.7 or more.

In the composition of the present disclosure, a BET specific surface area of the filler that is obtained by a nitrogen adsorption method is preferably 15 to 200 $m^2$/g.

In the composition of the present disclosure, a proportion (water vapor/nitrogen) of a BET specific surface area of the filler that is obtained by a water vapor adsorption method to the BET specific surface area of the filler that is obtained by the nitrogen adsorption method is preferably 1% to 60%.

In the composition of the present disclosure, the filler preferably has a bulk density of 0.10 g/$cm^3$ or higher.

In the composition of the present disclosure, a content of the filler is preferably 0.1 to 100 parts by mass based on 100 parts by mass of the perfluoroelastomer.

The composition of the present disclosure preferably further comprises at least one selected from the group consisting of an inorganic nitride, an organotin compound, an ammonia-generating compound, and a cross-linking agent.

Further, the present disclosure provides a crosslinked product obtained by crosslinking the above composition.

The crosslinked product of the present disclosure cab be suitably used as a sealing material.

In the crosslinked product of the present disclosure, a compression set measured after leaving the crosslinked product at 300°C for 70 hours at a compressibility of 25% is preferably 50% or less.

### EFFECTS OF INVENTION

The present disclosure can provide a composition capable of providing a crosslinked product having excellent plasma resistance and excellent compression set resistance.

DESCRIPTION OF EMBODIMENTS

Hereinafter, specific embodiments of the present disclosure will now be described in detail, but the present disclosure is not limited to the following embodiments.

A composition of the present disclosure contains a perfluoroelastomer and a filler.

Patent Document 1 discloses that the use of a non-oxide ceramic such as a carbide or a nitride as a filler added to a crosslinkable elastomer composition makes it possible to provide a formed article having a weight that does not change significantly even after both $NF_3$ plasma processing and $O_3$ processing that are performed in semiconductor manufacturing steps. Further, Patent Document 2 discloses that the use of silicon carbide particles having a bulk density of 0.15 $g/cm^3$ or less as a filler added to a crosslinkable fluorine-containing elastomer composition makes it possible to provide a formed article having a weight that does not change significantly even after both $O_2$ plasma processing and $O_2/CF_4$ plasma processing.

In contrast, in the composition of the present disclosure, a filler containing silicon carbide and graphite and having a ratio (area (C)/area (SiC)) of the area (C) of a peak derived from graphite in the filler to the area (SiC) of a peak derived from silicon carbide in the filler as measured by X-ray photoelectron spectroscopy (XPS) being 0.7 or more is used. It was found that the use of such a filler makes it possible to provide a crosslinked product exhibiting excellent plasma resistance and having excellent compression set resistance at a high temperature.

<Filler>

The filler that the composition of the present disclosure contains comprises silicon carbide and graphite and has a ratio (area (C)/area (SiC)) of 0.7 or more.

The area (SiC) of a peak derived from the silicon carbide in the filler and the area (C) of a peak derived from the graphite in the filler can be specified by the analysis of the filler using the x-ray photoelectron spectroscopy. The area (SiC) of the peak and the area (C) of the peak are the areas of the peaks of carbon 1s derived from silicon carbide and graphite in the filler.

The ratio (area (C)/area (SiC)) of the filler is preferably 1.0 or more and more preferably 1.6 or more, and is preferably 3.0 or less and more preferably 2.0 or less, from the viewpoint of further improving the plasma resistance and compression set resistance of a crosslinked product.

The filler of the present disclosure contains silicon carbide and graphite. The filler containing silicon carbide and graphite can be confirmed by, for example, acquiring a transmission electron microscope image of the filler and an element mapping image of the carbon element using a transmission electron microscope (TEM) provided with an energy-dispersive X-ray spectrometer (EDS).

The content of the graphite is preferably 0 to 10% by mass, more preferably 0.1% by mass or more, even more preferably 0.5% by mass or more, and particularly preferably 1.0% by mass or more and is more preferably 8.0% by mass or less, even more preferably 6.0% by mass or less, and particularly preferably 5.0% by mass or less, based on the mass of the filler. In the filler that the composition of the present disclosure contains, a filler containing a small amount of graphite that is so little that the decrease in weight cannot be measured in simultaneous differential thermogravimetry measurement is also included.

The content of the graphite can be measured by the following method. That is, about 10 mg of the filler is heated under an air atmosphere using a simultaneous differential thermogravimetry measuring instrument to increase the temperature of the filler from normal temperature up to 1,000°C at a rate of 10 °C/min, and the weight is measured at a point in time where the weight has reduced most. Next, the initial weight (the weight at normal temperature before heating) is subtracted from the weight at the point in time where the weight has reduced most, thereby calculating the amount of decrease in weight at the point in time where the weight has reduced most. Further, as the proportion of decrease in weight, the proportion (%) of the amount of decrease in weight at the point in time where the weight has reduced most based on the initial weight is calculated. In the present disclosure, the normal temperature may refer to a temperature within a range of 10°C to 40°C. The temperature width of 10°C to 40°C does not have any significant influences on the calculation value of the proportion of decrease in weight.

The decrease in weight caused by the heating of the filler when the filler contains silicon carbide and graphite is assumed to be attributed to the sublimation of the graphite that has bonded to oxygen in the air. Therefore, when the filler contains silicon carbide and graphite, it is possible to ascertain the content of the graphite in the filler by obtaining the proportion of decrease in weight of the filler.

The BET specific surface area of the filler that is obtained by the nitrogen adsorption method is preferably 15 to 150 $m^2/g$, more preferably 20 $m^2/g$ or more, even more preferably 40 $m^2/g$ or more, and still more preferably 50 $m^2/g$ or more, and is more preferably 100 $m^2/g$ or less and even more preferably 80 $m^2/g$ or less since the plasma resistance and compression set resistance of the obtained crosslinked product further improve.

The BET specific surface area of the filler that is obtained by the nitrogen adsorption method can be measured by

the BET flow method (single point) in which a nitrogen gas and a gas mixture (30% of nitrogen + 70% of helium) are used.

The BET specific surface area of the filler that is obtained by the water vapor adsorption method is preferably 1 to 15 $m^2/g$, more preferably 3 $m^2/g$ or more, even more preferably 4 $m^2/g$ or more, and is more preferably 12 $m^2/g$ or less and even more preferably 10 $m^2/g$ or less since the plasma resistance and compression set resistance of the obtained crosslinked product further improve.

The BET specific surface area of the filler that is obtained by the water vapor adsorption method can be calculated according to the BET method from a water vapor adsorption/desorption isotherm that has been obtained by performing the water vapor adsorption measurement of the filler.

The proportion (water vapor/nitrogen) of the BET specific surface area of the filler that is obtained by the water vapor adsorption method based on the BET specific surface area of the filler that is obtained by the nitrogen adsorption method is preferably 1% to 60%, more preferably 3% to 40%, even more preferably 4% or more, and still more preferably 5% or more, and is more preferably 30% or less and still more preferably 20% or less since the plasma resistance and compression set resistance of the obtained crosslinked product further improve.

The proportion (water vapor/nitrogen) of the BET specific surface area of the filler that is obtained by the water vapor adsorption method based on the BET specific surface area of the filler that is obtained by the nitrogen adsorption method is an index of the degree of hydrophilicity of the filler, and it means that the degree of hydrophilicity of the filler becomes higher as the proportion (water vapor/nitrogen) becomes higher.

The bulk density of the filler is preferably 0.10 $g/cm^3$ or higher, more preferably 0.12 $g/cm^3$ or higher, and even more preferably 0.14 $g/cm^3$ or higher and is more preferably 0.30 $g/cm^3$ or lower, and even more preferably 0.20 $g/cm^3$ or lower.

The bulk density of the filler can be calculated from the volume read from a scale of a 100 ml graduated cylinder (inner diameter: 28 mm) after 5 g of the powder is injected into the graduated cylinder and tapped 20 times from a height of 2 cm.

The average particle size of the filler is preferably 10 to 100 nm, more preferably 15 nm or more, and even more preferably 20 nm or more and is more preferably 90 nm or less, and even more preferably 80 nm or less since the plasma resistance and compression set resistance of the obtained crosslinked product further improve.

The average particle size (DBET) of the filler can be calculated by average particle size (nm) = 6,000/(specific surface area ($m^2/g$) $\times$ true density ($g/cm^3$)) after the BET specific surface area of the filler is measured by the nitrogen adsorption method. Regarding the value of the true density, the true density of silicon carbide can be considered as 3.22 $g/cm^3$.

The filler used in the present disclosure is preferably produced by the thermal plasma method. The filler used in the present disclosure can be produced by, for example, introducing a silicon powder or a silicon carbide powder into a thermal plasma flame using an inert gas as a carrier gas to evaporate the powder and produce a gas-phase mixture and bringing the gas-phase mixture and a silicon carbide gas into contact with each other. At this time, the ratio (area (C)/area (SiC)) of the obtained filler can be adjusted using a method described in Japanese Patent Laid-Open No. 2007-138287, Japanese Patent Laid-Open No. 2011-213524, or a non patent document (Ya-Li LI and Takamasa ISHIGAKI, "Synthesis and Structural Characterization of Core-Shell Si-SiC Composite Particles by Thermal Plasma In-Flight Carburization of Silicon Powder", Journal of the Ceramic Society of Japan, 2007, 115 (11), pp. 717 to 723).

The content of the filler in the composition of the present disclosure is preferably 0.1 to 100 parts by mass, more preferably 0.5 parts by mass or more, even more preferably 1.0 part by mass or more, and particularly preferably 5 parts by mass or more, and is more preferably 50 parts by mass or less, even more preferably 30 parts by mass or less, and particularly preferably 25 parts by mass or less based on 100 parts by mass of the perfluoroelastomer since the plasma resistance and compression set resistance of the obtained crosslinked product further improve.

The composition of the present disclosure preferably has a sea-island structure formed of an island composed of the filler and the sea composed of the perfluoroelastomer since the plasma resistance and compression set resistance of the obtained crosslinked product further improve. Such a sea-island structure can be formed by adding the filler containing silicon carbide and having the above-described ratio (area (C)/area (SiC)) to the perfluoroelastomer. When conventional silicon carbide is added to a perfluoroelastomer, particularly, in a case where the BET specific surface area (nitrogen adsorption method) or average particle size of the silicon carbide is small, a composition having a network structure formed of the silicon carbide highly dispersed in the perfluoroelastomer can be obtained. On the other hand, when a filler exhibiting the above-described ratio (area (C)/area (SiC)) is used, even in a case where the BET specific surface area (nitrogen adsorption method) or average particle size of the silicon carbide is small, a composition having a sea-island structure can be obtained. The dispersion state of the filler in the composition can be confirmed by, for example, observing the exposed surface or cut surface of the composition with a transmission electron microscope (TEM).

<Perfluoroelastomer>

The composition of the present disclosure comprises a perfluoroelastomer.

The perfluoroelastomer in the present disclosure means a fluoropolymer having a perfluoromonomer unit content of 90 mol% or more and preferably 91 mol% or more based on all polymerized units, having a glass transition temperature of 20°C or lower, having a melting peak (ΔH) of 4.5 J/g or lower, and having a fluorine atom concentration in the fluoropolymer of 71% by mass or more and preferably 71.5% by mass or more. The fluorine atom concentration in the fluoropolymer in the present disclosure is the concentration (% by mass) of the fluorine atoms contained in the fluoropolymer calculated based on the type and content of each monomer constituting the fluoropolymer.

In the present disclosure, the perfluoromonomer is a monomer that does not contain a carbon-hydrogen bond within the molecule. The perfluoromonomer may be a monomer containing carbon atoms and fluorine atoms in which some of the fluorine atoms bonded to any of the carbon atoms are replaced by chlorine atoms, and may be a monomer containing nitrogen atom, oxygen atom, sulfur atom, phosphorus atom, boron atom, or silicon atom in addition to the carbon atoms. The perfluoromonomer is preferably a monomer in which all hydrogen atoms are replaced with fluorine atoms. A monomer that provides a crosslinking site is not encompassed within the perfluoromonomer.

The monomer that provides a crosslinking site is a monomer (a cure site monomer) having a crosslinkable group that provides the fluoropolymer with a crosslinking site for forming a crosslink with a curing agent.

In the present disclosure, the content of each monomer constituting the perfluoroelastomer can be calculated by suitably combining NMR, FT-IR, elemental analysis, fluorescent X-ray analysis, and other known methods according to the type of monomer.

The perfluoromonomer that provides a perfluoromonomer unit constituting the perfluoroelastomer is preferably at least one selected from the group consisting of:

tetrafluoroethylene (TFE);
hexafluoropropylene (HFP);
a fluoromonomer represented by general formula (13): $CF_2=CF\text{-}OR_{f13}$
wherein $Rf^{13}$ represents a perfluoroalkyl group having 1 to 8 carbon atoms;
a fluoromonomer represented by general formula (14): $CF_2=CFOCF_{20}Rf^{14}$
wherein $Rf^{14}$ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms including 1 to 3 oxygen atoms; and
a fluoromonomer represented by general formula (15):

$$CF_2=CFO(CF_2CF(Y^{15})O)_m(CF_2)_nF$$

wherein $Y^{15}$ represents a fluorine atom or a trifluoromethyl group, m is an integer of 1 to 4, and n is an integer of 1 to 4.

The perfluoroelastomer is preferably at least one selected from the group consisting of perfluoroelastomers having a TFE unit, such as a copolymer of TFE/a fluoromonomer represented by general formula (13), (14), or (15), and a copolymer of TFE/a fluoromonomer represented by general formula (13), (14), or (15)/a monomer that provides a crosslinking site.

In the case of a copolymer of TFE/perfluoro(methyl vinyl ether) (PMVE), the compositional feature is preferably 45 to 90/10 to 55 (mol%), more preferably 55 to 80/20 to 45, even more preferably 55 to 70/30 to 45, and most preferably 56 to 69.5/30.5 to 44.

In the case of a copolymer of TFE/PMVE/a monomer that provides a crosslinking site, the compositional feature is preferably 45 to 89.9/10 to 54.9/0.01 to 4 (mol%), more preferably 55 to 77.9/20 to 49.9/0.01 to 3.5, even more preferably 55 to 69.8/30 to 44.8/0.2 to 3, and most preferably 55.3 to 69.5/30.3 to 44.5/0.2 to 2.8.

In the case of a copolymer of TFE/a fluoromonomer having 4 to 12 carbon atoms and represented by general formula (13), (14), or (15), the compositional feature is preferably 50 to 90/10 to 50 (mol%), more preferably 60 to 88/12 to 40, even more preferably 65 to 85/15 to 35, and most preferably 66 to 84/16 to 34.

In the case of a copolymer of TFE/a fluoromonomer having 4 to 12 carbon atoms and represented by general formula (13), (14), or (15)/a monomer that provides a crosslinking site, the compositional feature is preferably 50 to 89.9/10 to 49.9/0.01 to 4 (mol%), more preferably 60 to 87.9/12 to 39.9/0.1 to 3.5, even more preferably 65 to 84.8/15 to 34.8/0.2 to 3, and most preferably 66 to 84.3/15.5 to 33.8/0.2 to 2.8.

When the compositional feature is outside these ranges, the copolymer does not have properties of a rubber elastic body, and tends to have properties similar to those of a resin.

The perfluoroelastomer is preferably at least one selected from the group consisting of a copolymer of TFE/a fluoromonomer represented by general formula (15)/a monomer that provides a crosslinking site, a copolymer of TFE/a fluoromonomer represented by general formula (15), a copolymer of TFE/a fluoromonomer represented by general formula (13)/a monomer that provides a crosslinking site, and a copolymer of TFE/a fluoromonomer represented by general formula (13),

Examples of the perfluoroelastomer include perfluoroelastomers described in International Publication No. WO 97/24381, Japanese Patent Laid-Open No. 61-57324, Japanese Patent Laid-Open No. 4-81608, Japanese Patent Laid-Open No. 5-13961, and the like.

The monomer that provides a crosslinking site is a monomer (a cure site monomer) having a crosslinkable group that provides the perfluoroelastomer with a crosslinking site for forming a crosslink with a curing agent.

Examples of the monomer that provides a crosslinking site include monomers represented by:

general formula (16): $CX^4_2=CX^5R_f^2X^6$

wherein $X^4$ and $X^5$ are each independently H, F, or an alkyl group having 1 to 5 carbon atoms; $R_f^2$ is a linear or branched alkylene group or oxyalkylene group which may have one or more etheric oxygen atoms, which may have an aromatic ring, and in which some or all of hydrogen atoms may be replaced with fluorine atoms; and $X^6$ is an iodine atom, a bromine atom, a nitrile group, a carboxyl group, an alkoxycarbonyl group, a hydroxyl group, a vinyl group, an azide group, a sulfonyl azide group, a carbonyl azide group, or alkyne group. The alkyl group may be an ethylnyl group.

Examples of the monomer that provides a crosslinking site include a fluoromonomer represented by:

general formula (17) : $CX^{16}_2=CX^{16}$- $Rf^{16}CHR^{16}X^{17}$

wherein $X^{16}$ is each independently a hydrogen atom, a fluorine atom, or $CH_3$, $Rf^{16}$ is a fluoroalkylene group, a perfluoroalkylene group, a fluoro(poly)oxyalkylene group, or a perfluoro(poly)oxyalkylene group, $R^{16}$ is a hydrogen atom or $CH_3$, and $X^{17}$ is an iodine atom or a bromine atom; a fluoromonomer represented by:

general formula (18): $CX^{16}_2=CX_{16}$- $Rf_{17}X_{17}$

wherein $X^{16}$ is each independently a hydrogen atom, a fluorine atom, or $CH_3$, $Rf^{17}$ is a fluoroalkylene group, a perfluoroalkylene group, a fluoro(poly)oxyalkylene group, or a perfluoro(poly)oxyalkylene group, and $X^{17}$ is an iodine atom or a bromine atom; a fluoromonomer represented by:

general formula (19): $CF_2=CFO(CF_2CF(CF_3)O)_m(CF_2)_n-X^{18}$

wherein m is an integer of 0 to 5, n is an integer of 1 to 3, and $X^{18}$ is a cyano group, an azide group, a sulfonyl azide group, a carbonyl azide group, a carboxyl group, an alkoxycarbonyl group, an alkyne group, an iodine atom, a bromine atom, or $-CH_2I$; and a monomer represented by: a fluoromonomer represented by

general formula (20): $CF_2=CFCF_2O(CF(CF_3)CF_2O)_m(CF(CF_3))_n-X^{19}$

wherein m is an integer of 0 to 5, n is an integer of 1 to 3, and $X^{19}$ is a cyano group, a carboxyl group, an alkoxycarbonyl group, an iodine atom, a bromine atom, or $-CH_2OH$; and a monomer represented by:

general formula (21): $CR^{20}_2=CR^{20}-Z-CR^{20}= CR^{20}_2$

wherein $CR^{20}$ is each independently a hydrogen atom or an alkyl group having 1 to 5 carbon atoms. Z is an alkylene group having 1 to 18 carbon atoms, a cycloalkylene group having 3 to 18 carbon atoms, an alkylene group or oxyalkylene group having 1 to 10 carbon atoms which is at least partially fluorinated, which is linear or branched and may have an oxygen atom, or a (per)fluoropolyoxyalkylene group represented by

$$-(Q)_pCF_2O-(CF_2CF_2O)_m(CF_2O)_n-CF_2-(Q)_p-$$

wherein Q is an alkylene group or an oxyalkylene group. P is 0 or 1. m/n are 0.2 to 5, and having a molecular weight of 500 to 10,000.

$X^{16}$ is preferably a fluorine atom. $Rf^{16}$ and $Rf^{17}$ are preferably a perfluoroalkylene group having 1 to 5 carbon atoms. $R^{16}$ is preferably a hydrogen atom. $X^{18}$ is preferably a cyano group, an alkoxycarbonyl group, an iodine atom, a bromine atom, or $-CH_2I$. $X^{19}$ is preferably a cyano group, an alkoxycarbonyl group, an iodine atom, a bromine atom, or $-CH_2OH$.

The monomer that provides a crosslinking site is preferably at least one selected from the group consisting of $CF_2=CFOCF_2CF(CF_3)OCF_2CF_2CN$, $CF_2=CFOCF_2CF(CF_3)OCF_2CF_2COOH$, $CF_2=CFOCF_2CF(CF_3)OCF_2CF_2CH_2I$, $CF_2=CFOCF_2CF_2CH_2I$, $CH_2=CFCF_2OCF(CF_3)CF_2OCF(CF_3)CN$, $CH_2=CFCF_2OCF(CF_3)CF_2OCF(CF_3)COOH$, $CH_2=CFCF_2OCF(CF_3)CF_2OCF(CF_3)CH_2OH$, $CH_2=CHCF_2CF_2I$, $CH_2=CH(CF_2)_2CH=CH_2$, $CH_2=CH(CF_2)_6CH=CH_2$,

$CF_2=CFO(CF_2)_3CN$, and $CF_2=CFO(CF_2)_5CN$, and is more preferably at least one selected from the group consisting of $CF_2=CFOCF_2CF(CF_3)OCF_2CF_2CN$, $CF_2=CFO(CF_2)_{5C}N$, and $CF_2=CFOCF_2CF_2CH_2I$.

The perfluoroelastomer preferably has a glass transition temperature of -30°C or higher, more preferably -20°C or higher, and even more preferably -10°C or higher, from the viewpoint of excellent compression set properties at high temperatures. Also, the perfluoroelastomer preferably has a glass transition temperature of 10°C or lower, more preferably 5°C or lower, and even more preferably 0°C or lower, from the viewpoint of good low-temperature resistance.

The glass transition temperature can be determined as follows: using a differential scanning calorimeter (DSC822e, manufactured by Mettler Toledo), a DSC curve is obtained by heating 10 mg of a sample at 10°C/min; and the temperature is read at the intermediate point of two intersections between each of the extension lines of the baselines before and after the secondary transition of the DSC curve and the tangent line at the inflection point of the DSC curve.

The perfluoroelastomer preferably has a Mooney viscosity ML (1+20) at 170°C of 30 or more, more preferably 40 or more, and even more preferably 50 or more, from the viewpoint of good heat resistance. Also, the perfluoroelastomer preferably has a Mooney viscosity ML (1+20) at 170°C of 100 or less, more preferably 90 or less, and even more preferably 80 or less, from the viewpoint of good processability.

The perfluoroelastomer preferably has a Mooney viscosity ML (1+20) at 140°C of 30 or more, more preferably 40 or more, and even more preferably 50 or more, from the viewpoint of good heat resistance. Also, the perfluoroelastomer preferably has a Mooney viscosity ML (1+20) at 140°C of 180 or less, more preferably 150 or less, and even more preferably 110 or less, from the viewpoint of good processability.

The perfluoroelastomer preferably has a Mooney viscosity ML (1+10) at 100°C of 10 or more, more preferably 20 or more, and even more preferably 30 or more, from the viewpoint of good heat resistance. Also, the perfluoroelastomer preferably has a Mooney viscosity ML (1+10) at 100°C of 120 or less, more preferably 100 or less, and even more preferably 80 or less, from the viewpoint of good processability.

The Mooney viscosity can be measured at 170°C, 140°C, or 100°C in accordance with JIS K 6300 using a Mooney viscometer MV 2000E manufactured by ALPHA TECHNOLOGIES.

The perfluoroelastomer can be produced by a conventional method. However, from the viewpoint of a narrow molecular weight distribution of the obtained polymer, easy control of the molecular weight, and being able to introduce an iodine atom or a bromine atom to a terminal, an iodine compound or a bromine compound can also be used as a chain transfer agent. Examples of the polymerization method performed using an iodine compound or a bromine compound include a method in which emulsion polymerization is carried out in an aqueous medium under pressure in the presence of the iodine compound or the bromine compound in a substantially oxygen-free state (iodine transfer polymerization method). Representative examples of the iodine compound or the bromine compound to be used include compounds represented by the general formula:

$$R^{21}I_xBr_y$$

wherein x and y are each an integer of 0 to 2 and satisfy $1 \leq x + y \leq 2$; and $R^{21}$ is a saturated or unsaturated fluorohydrocarbon group or chlorofluorohydrocarbon group having 1 to 16 carbon atoms, or a hydrocarbon group having 1 to 3 carbon atoms, and optionally containing an oxygen atom. By using an iodine compound or a bromine compound, an iodine atom or a bromine atom is introduced into the polymer to function as a cross-linking point.

Examples of the iodine compound or bromine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, CFBrClCFClBr, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodo- and monobromo-substitution product, diiodo- and monobromo-substitution product, and (2-iodoethyl)- and (2-bromoethyl)-substitution product of benzene. These compounds may be used alone or in any combination.

Among these, it is preferable to use 1,4-diiodoperfluorobutane, 1,6-diiodoperfluorohexane, or 2-iodoperfluoropropane, from the viewpoint of polymerization reactivity, cross-linking reactivity, availability, and the like.

The perfluoroelastomer preferably has a cyano group (-CN group). The perfluoroelastomer having a cyano group (-CN group) can be crosslinked by, for example, cyclotrimerization of the cyano group to form a triazine ring or forming an imidazole ring using a tetramine compound as a cross-linking agent, and can impart excellent compression set properties and heat resistance to a crosslinked product.

The perfluoroelastomer having a cyano group preferably has a cyano group (-CN group) at a main chain terminal and/or in a side chain.

Examples of the perfluoroelastomer having a cyano group (-CN group) at a terminal of the main chain and/or in a

side chain include, copolymers in which the monomer that provides a crosslinking site is a monomer having a cyano group (-CN group) among the above-described copolymers of TFE/fluoromonomer represented by formula (13), (14), or (15)/monomer that provides a crosslinking site. In this case, the content of the monomer unit having a cyano group (-CN group) may be 0.1 to 5 mol% based on the total amount of the TFE unit and the fluoromonomer unit represented by formula (13), (14), or (15), from the viewpoint of good crosslinking characteristics and heat resistance, and may even be 0.3 to 3 mol%. Even more preferable compositional features are as described above.

Examples of the monomer having a cyano group (-CN group) include monomers represented by:

Formula: $CY^1_2=CY^1(CF_2)_n-CN$

wherein each $Y^1$ is independently a hydrogen atom or a fluorine atom, and n is an integer of 1 to 8;

Formula: $CF_2=CFCF_2Rf^8-CN$

wherein $Rf^8$ is $-(OCF_2)_n-$ or $-(OCF(CF_3))_n-$, and n is an integer of 0 to 5;

Formula: $CF_2=CFCF_2(OCF(CF_3)CF_2)_m(OCH_2CF_2CF_2)_nOCH_2CF_2-CN$

wherein m is an integer of 0 to 5, and n is an integer of 0 to 5;

Formula: $CF_2=CFCF_2(OCH_2CF_2CF_2)_m(OCF(CF_3)CF_2)_nOCF(CF_3)-CN$

wherein m is an integer of 0 to 5, and n is an integer of 0 to 5;

Formula: $CF_2=CF(OCF_2CF(CF_3))_mO(CF_2)_n-CN$

wherein m is an integer of 0 to 5, and n is an integer of 1 to 8;

Formula: $CF_2=CF(OCF_2CF(CF_3))_m-CN$

wherein m is an integer of 1 to 5;

Formula: $CF_2=CFOCF_2(CF(CF_3)OCF_2)_nCF(-CN)CF_3$

wherein n is an integer of 1 to 4;

Formula: $CF_2=CFO(CF_2)_nOCF(CF_3)-CN$

wherein n is an integer of 2 to 5;

Formula: $CF_2=CFO(CF_2)_n-(C_6H_4)-CN$

wherein n is an integer of 1 to 6;

Formula: $CF_2=CF(OCF_2CF(CF_3))_nOCF_2CF(CF_3)-CN$

wherein n is an integer of 1 to 2;

Formula: $CH_2=CFCF_2O(CF(CF_3)CF_2O)_nCF(CF_3)-CN$

wherein n is an integer of 0 to 5;

Formula: $CF_2=CFO(CF_2CF(CF_3)O)_m(CF_2)_n-CN$

wherein m is an integer of 0 to 5, and n is an integer of 1 to 3;

Formula: $CH_2=CFCF_2OCF(CF_3)OCF (CF_3)-CN$;

Formula: $CH_2=CFCF_2OCH_2CF_2\text{-}CN$;

Formula: $CF_2=CFO(CF_2CF(CF_3)O)_mCF_2CF\ (CF_3)\text{-}CN$

wherein m is an integer of 0 or more;

Formula: $CF_2=CFOCF\ (CF_3)CF_2O(CF_2)_n\text{-}CN$

wherein n is an integer of 1 or more;

Formula: $CF_2=CFOCF_2OCF_2CF(CF_3)OCF_2\text{-}CN$;

Formula: $CF_2=CFO(CF_2)_3CN$;

Formula: $CF_2=CFO(CF_2)_5CN$.

Each of these monomers can be used singly or in any combination.

Among the above, a monomer represented by the

formula: $CF_2=CF(OCF_2CF(CF_3))_mO(CF_2)_n\text{-}CN$

wherein m is an integer of 0 to 5, n is an integer of 1 to 8; and $CF_2=CFOCF_2CF(CF_3)OCF_2CF_2CN$ is more preferable.

These perfluoroelastomers can be produced by a conventional method.

Specific examples of the perfluoroelastomer may include the fluoroelastomers described in International Publication No. WO 97/24381, Japanese Patent Publication No. 61-57324, Japanese Patent Publication No. 4-81608, Japanese Patent Publication No. 5-13961, and the like.

<Other components>

The composition of the present disclosure may further contain a filler other than the above-described filler containing the silicon carbide.

Examples of the filler include an imide-based filler having an imide structure such as polyimide, polyamideimide, and polyetherimide, an organic filler made of engineering plastic such as polyarylate, polysulfone, polyethersulfone, polyphenylene sulfide, polyether ether ketone, polyether ketone, and polyoxybenzoate, a metal oxide filler such as silicon oxide, aluminum oxide, and yttrium oxide, a metal carbide such as aluminum carbide, a metal nitride filler such as silicon nitride and aluminum nitride, and an inorganic filler such as carbon black, aluminum fluoride, and carbon fluoride.

Among these, from the viewpoint of shielding effects for various plasmas, carbon black, aluminum oxide, silicon oxide, yttrium oxide, silicon nitride, polyimide, and fluorocarbon are preferable.

Further, the inorganic filler and organic filler may be used alone or blended in a combination of two or more thereof.

Especially in fields not requiring high purity and non-contamination properties, an ordinary additive blended in the composition, such as a processing aid, a plasticizer, and a colorant, can optionally be blended. One or more common cross-linking agents and cross-linking aids different from those described above may also be blended.

The composition may contain an organic basic compound. Examples of the organic basic compound include:

octadecylamine of formula: $CH_3(CH_2)_{17}\text{-}NH_2$;

erucamide of formula: $H_2N\text{-}C(O)\text{-}(CH_2)_{11}\text{-}CH=CH\text{-}(CH_2)_7CH_3$

oleamide of formula: $H_2N\text{-}C(O)\text{-}(CH_2)_7\text{-}CH=CH\text{-}(CH_2)_7CH_3$;

hexamethylenediamine of formula: $H_2N\text{-}(CH_2)_6\text{-}NH_2$; and

1,8-diazabicycloundec-7-en (DBU) of formula:

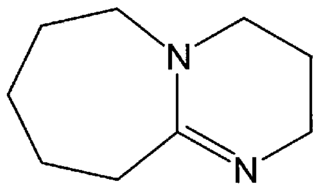

and the like.

<Cross-linking agent and the like>

The composition of the present disclosure may further comprise at least one selected from the group consisting of an inorganic nitride, an organotin compound, an ammonia-generating compound, and a cross-linking agent. When the composition of the present disclosure contains these components such as a cross-linking agent, a crosslinked product can be easily obtained from the composition of the present disclosure.

The inorganic nitride is not limited, and examples include silicon nitride ($Si_3N_4$), lithium nitride, titanium nitride, aluminum nitride, boron nitride, vanadium nitride, and zirconium nitride. Among these, silicon nitride can provide nano-sized fine particles and is thus preferable.

Examples of the organotin compound include tetraphenyltin and triphenyltin.

The ammonia-generating compound is preferably a compound that generates ammonia at 40 to 330°C.

The ammonia-generating compound is preferably urea, a derivative thereof, or an ammonium salt, more preferably urea or an ammonium salt, and even more preferably urea. The ammonium salt may be either an organic ammonium salt or an inorganic ammonium salt. Also, the ammonia-generating compound may be a compound that reacts with a small amount of water to generate ammonia.

Examples of the urea derivative include biurea, thiourea, urea hydrochloride, and biuret.

Examples of the organic ammonium salt include non-fluorine carboxylic or sulfonic acid ammonium salts such as ammonium benzoate, ammonium adipate, and ammonium phthalate.

Examples of the inorganic ammonium salt include the compounds described in Japanese Patent Laid-Open No. 9-111081, such as ammonium sulfate, ammonium carbonate, ammonium nitrate, and ammonium phosphate.

In addition, examples of the ammonia-generating compound also include acetaldehyde ammonia, hexamethylenetetramine, formamidine, formamidine hydrochloride, formamidine acetate, t-butyl carbamate, benzyl carbamate, and phthalamide.

Examples of the cross-linking agent include cross-linking agents used in peroxide cross-linking, polyol cross-linking, polyamine cross-linking, triazine cross-linking, oxazole cross-linking, imidazole cross-linking, and thiazole cross-linking. When the perfluoroelastomer has a cyano group (-CN group), the cross-linking agent is preferably at least one selected from the group consisting of an oxazole cross-linking agent, an imidazole cross-linking agent, and a thiazole cross-linking agent.

The cross-linking agent used for peroxide crosslinking may be any organic peroxide that can easily generate a peroxy radical in the presence of heat or a redox system. Specific examples include 1,1-bis(t-butylperoxy)-3,5,5-trimethylcyclohexane, 2,5-dimethylhexane-2,5-dihydroperoxide, di-t-butyl peroxide (Perbutyl D), t-butylcumyl peroxide (Perbutyl C), dicumyl peroxide (Percumyl D, Percumyl D-40, Percumyl D-40 MB(T)), $\alpha,\alpha$-bis(t-butylperoxy)-p-diisopropylbenzene, 2,5-dimethyl-2,5-di(t-butylperoxy)hexane (Perhexa 25B, Perhexa 25B-40), 2,5-dimethyl-2,5-di(t-butylperoxy)hexyne-3 (Perhexyne 25B, Perhexyne 25B-40), benzoyl peroxide, t-butylperoxybenzene, 2,5-dimethyl-2,5-di(benzoylperoxy)hexane (Perhexa 25Z), t-butylperoxy maleate (t-butyl MA), t-butylperoxyisopropyl carbonate (Perbutyl I-75), methyl ethyl ketone peroxide (Permek D (DR), Permek H (HR, HY), Permek N (NR, NY), Permek S (SR), Permek F (FR), Permek G (GR, GY)), cyclohexanone peroxide (Perhexa H), acetylacetone peroxide (Percure AH, AL), 1,1-di(t-hexylperoxy)-3,3,5-trimethylcyclohexane (Perhexa TMH), 1,1-di(t-hexylperoxy)cyclohexane (Perhexa HC), 1,1-di(t-butylperoxy)-2-methyl cyclohexane (Perhexa MC), 1,1-di(t-butylperoxy)cyclohexane (Perhexa C-80(S), Perhexa C-75(EB), Perhexa C(C), Perhexa C-40, Perhexa C-40 MB(S)), 2,2-di(t-butylperoxy)butane (Perhexa 22), butyl 4,4-di-(t-butylperoxy) pentanoate (Perhexa V, Perhexa V-40(F)), 2,2-di(4,4-di-(t-butylperoxy)cyclohexyl)propane (Pertetra A), p-menthane hydroperoxide (Permentha H), diisopropylbenzene hydroperoxide (Percumyl P), 1,1,3,3-tetramethylbutyl hydroperoxide (Perocta H), cumene hydroperoxide (Percumyl H-80), t-butyl hydroperoxide (Perbutyl H-69), di(2-t-butylperoxyisopropyl)benzene (Perbutyl P, Perbutyl P-40, Peroxymon F-40, Perbutyl P-40 MB(K)), di-t-hexyl peroxide (Perhexyl D), diisobutyryl peroxide (Peroyl IB), di(3,5,5-trimethylhexanoyl) peroxide (Peroyl 355(S)), dilauroyl peroxide (Peroyl L), disuccinic peroxide (Peroyl SA), a mixture of di-(3-methylbenzoyl) peroxide, benzoyl(3-methylbenzoyl) peroxide, and dibenzoyl peroxide (Nyper BMT-K40, Nyper BMT-M), dibenzoyl peroxide (Nyper BW, Nyper BO, Nyper FF, Nyper BS, Nyper E, Nyper NS), di(4-methylbenzoyl) peroxide (Nyper PMB), di-n-propyl peroxydicarbonate (Peroyl NPP-50M), diisopropyl peroxydicarbonate (Peroyl IPP-50, Peroyl IPP-27), di(4-t-butylcyclohexyl) peroxydicarbonate

(Peroyl TCP), di(2-ethylhexyl) peroxydicarbonate (Peroyl OPP), di-sec-butylperoxydicarbonate (Peroyl SBP), cumyl peroxyneodecanoate (Percumyl ND, Percumyl ND-50E), 1,1,3,3-tetramethylbutylperoxyneodecanoate (Perocta ND, Perocta ND-50E), t-hexyl peroxyneodecanoate (Perhexyl ND, Perhexyl ND-50E), t-butylperoxyneodecanoate (Perbutyl ND, Perbutyl ND-50E), t-butylperoxy neoheptanoate (Perbutyl NHP), t-hexylperoxy pivalate (Perhexyl PV, Perhexyl PV-50E), t-butylperoxy pivalate (Perbutyl PV, Perbutyl PV-40E), 1,1,3,3-tetramethylbutylperoxy-2-ethyl hexanoate (Perocta O), 2,5-dimethyl-2,5-di(2-ethylhexanoylperoxy)hexane (Perhexa 25 O), t-hexyl peroxy-2-ethyl hexanoate (Perhexyl O, Percure HO(N)), t-butylperoxy-2-ethyl hexanoate (Perbutyl O, Percure O), t-hexyl peroxyisopropyl monocarbonate (Perhexyl I), t-butylperoxy-3,5,5-trimethyl hexanoate (Perbutyl 355), t-butylperoxy laurate (Perbutyl L), t-butylperoxy-2-ethylhexyl monocarbonate (Perbutyl E), t-hexyl peroxybenzoate (Perhexyl Z), t-butyl peroxyacetate (Perbutyl A), a mixture of t-butylperoxy-3-methyl benzoate and t-butylperoxy benzoate (Perbutyl ZT), t-butylperoxy benzoate (Perbutyl Z), t-butylperoxyallyl monocarbonate (peromer AC), 3,3',4,4'-tetra(t-butylperoxycarbonyl)benzophenone (BTTB-25), and 2,3-dimethyl-2,3-diphenylbutane (Nofmer BC-90). Preferred among these are dialkyl-type organic peroxides, and particularly preferred is 2,5-dimethyl-2,5-di(t-butylperoxy)hexane. Usually, the type and amount of the organic peroxide are selected in consideration of the amount of active -O-O-, the decomposition temperature, and the like.

Further, the cross-linking aid that can be used in this case may be a compound having a reactivity with a peroxy radical and a polymer radical. Examples thereof include polyfunctional compounds having a functional group such as $-CH=CH_2$, $-CH_2CH=CH_2$, $-CF=CF_2$, $-C(CF_3)=CF_2$, $-C(CH_3)=CF_2$, $-CF=CF(CF_3)$, $-CF=CF(CH_3)$, $-C(C_6H_5)=CF_2$, $-CF=CF(C_6H_5)$, $-CH=CF_2$, $-CF=CHF$, $-C(CF_3)=CHF$, $-CF=CH(CF_3)$, $-CH=CF(CF_3)$ and the like wherein "$C_6H_5$" represents a phenyl radical. Specific examples thereof include triallyl cyanurate, triallyl isocyanurate (TAIC), triacryl formal, triallyl trimerite, N,N'-n-phenylene bismaleimide, dipropargyl terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine 2,4,6-trione), tris(diallylamine)-S-triazine, triallyl phosphite, N,N-diallylacrylamide, 1,6-divinyldodecafluorohexane, and the like.

Further, examples of a cross-linking aid used together with the peroxide cross-linking agent include a compound represented by formula (31):

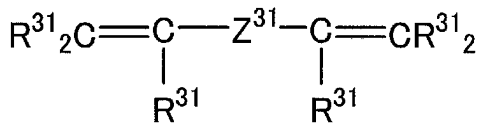

wherein each of the six $R^{31}$ is independently H, a halogen atom, or an optionally halogenated group having 1 to 5 carbon atoms in which an ether bond may be inserted, and $Z^{31}$ is an optionally halogenated linear or branched alkylene group or cycloalkylene group, or a (per)fluoropolyoxyalkylene group, each of which has 1 to 18 carbon atoms and optionally contains a hetero atom.

Examples of the compound represented by formula (31) include a compound represented by formula (32):

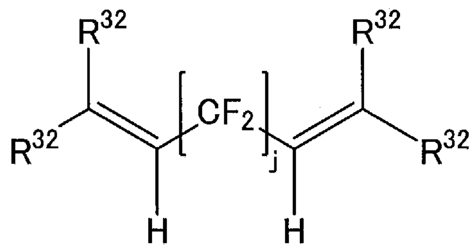

wherein j is an integer of 2 to 10, and preferably an integer of 4 to 8, and each of the four $R^{32}$ is independently H, F or an alkyl group or (per)fluoroalkyl group having 1 to 5 carbon atoms, a compound represented by formula (33):

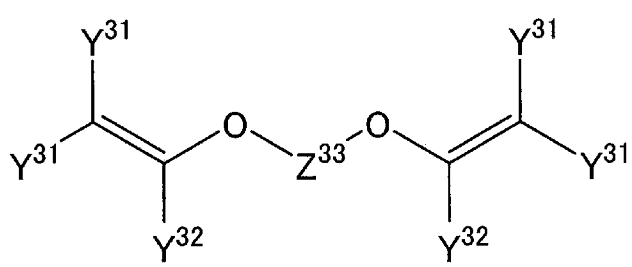

wherein each $Y^{31}$ is independently F, Cl, or H, each $Y^{32}$ is independently F, Cl, H, or $OR^{33}$, where $R^{33}$ is a branched or linear alkyl group that may be partially, substantially, or completely fluorinated or chlorinated, $Z^{33}$ is an optionally fluorinated divalent group having 2 to 10 carbon atoms in which an ether bond may be inserted, preferably $Z^{33}$ is a - $(CF_2)_m$- group in which m is an integer of 3 to 5, and the compound represented by formula (33) is preferably $F_2C=CF-O-(CF_2)_5-0-CF=CF_2$, and a compound represented by formula (34):

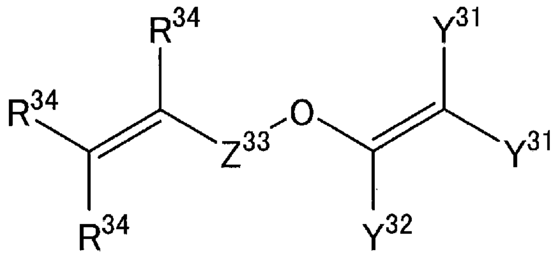

wherein $Y^{31}$, $Y^{32}$, and $Z^{33}$ are as defined above, and each $R^{34}$ is independently H, F, or an alkyl group or (per)fluoroalkyl group having 1 to 5 carbon atoms.

Examples of the cross-linking agent, or cross-linking aid used together with the peroxide cross-linking agent, include compounds having at least one structure represented by formula (35):

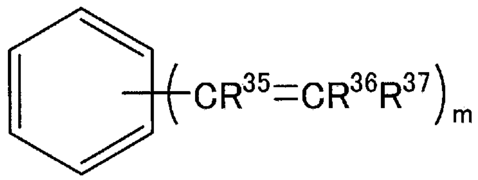

wherein $R^{35}$ to $R^{37}$ are each independently a hydrogen atom, a fluorine atom, an alkyl group, a fluorinated alkyl group, or a substituted or unsubstituted aryl group, and at least one of $R^{35}$ to $R^{37}$ is a fluorine atom or a group containing a fluorine atom; m is an integer of 1 to 5; when m is 2 or more, m-number of $R^{35}$ to $R^{37}$ may be the same or different with each other; and the hydrogen atoms of the benzene ring may be substituted. When m is 1, it is preferable to have two or more of the structures.

Examples of the compound having a structure represented by formula (36) include compounds represented by formula (36):

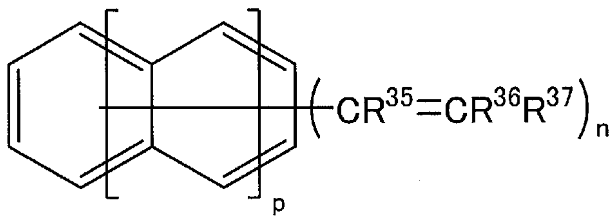

wherein $R^{35}$ to $R^{37}$ are as defined above; p is an integer of 0 to 2; and n is an integer of 2 to 6, compounds represented by formula (37):

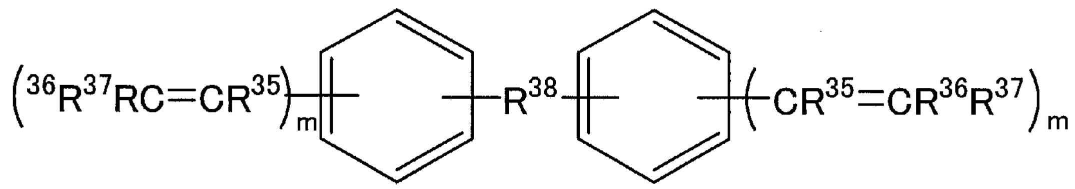

wherein $R^{35}$ to $R^{37}$ are as defined above; $R^{38}$ is a single bond, $-SO_2-$, -O-, -S-, -CO-, a heteroatom-containing group, a substituted or unsubstituted alkylene group, a substituted or unsubstituted cycloalkylene group or a substituted or unsubstituted arylene group; m is an integer of 1 to 5; and a part or all of these groups may be fluorinated.

The heteroatom-containing group is not limited as long as it is a divalent group containing a heteroatom. Examples of the heteroatom include an oxygen atom, a nitrogen atom, a sulfur atom, a boron atom, and a phosphorus

atom.

Examples of the cross-linking agent used for polyol crosslinking include polyhydric alcohol compounds such as bisphenol A and bisphenol AF.

Examples of the cross-linking agent used for polyamine crosslinking include polyamine compounds such as hexamethylenediamine carbamate, N,N'-dicinenamiridene-1,6-hexanediamine, and 4,4'-bis(aminocyclohexyl)methane carbamate.

Examples of the cross-linking agents used for oxazole crosslinking, imidazole crosslinking, and thiazole crosslinking include a bisdiaminophenyl-based cross-linking agent, a bis-aminophenol-based cross-linking agent, and a bisaminothiophenol-based cross-linking agent represented by formula (41):

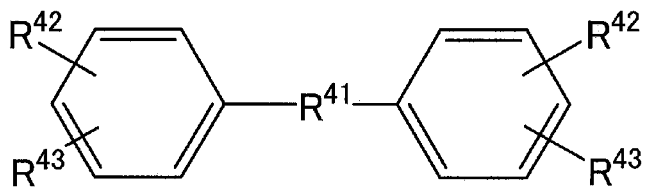

wherein $R^{41}$ is $-SO_2-$, -O-, -CO-, an alkylene group having 1 to 6 carbon atoms, a perfluoroalkylene group having 1 to 10 carbon atoms, a single bond, or a group represented by:

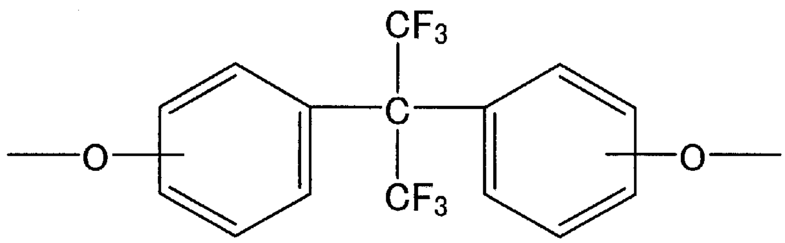

one of $R^{42}$ and $R^{43}$ is $-NH_2$ and the other is $-NHR^{44}$, $-NH_2$, -OH, or -SH, $R^{44}$ is a hydrogen atom, a fluorine atom, or a monovalent organic group, preferably $R^{42}$ is $-NH_2$ and $R^{43}$ is $-NHR^{44}$; preferred specific examples of the alkylene group having 1 to 6 carbon atoms include a methylene group, an ethylene group, a propylene group, a butylene group, a pentylene group, a hexylene group, and the like, and examples of the perfluoroalkylene group having 1 to 10 carbon atoms include:

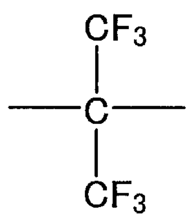

These compounds are known as examples of bisdiaminophenyl compounds in Japanese Patent Publication No. 2-59177, Japanese Patent Laid-Open No. 8-120146, and the like;

a bisamidrazone-based cross-linking agent represented by formula (42):

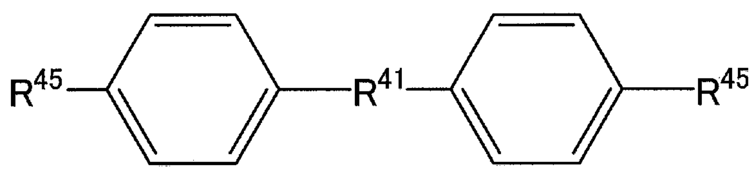

wherein $R^{41}$ is as defined above, and each $R^{45}$ is independently any one of the following groups:

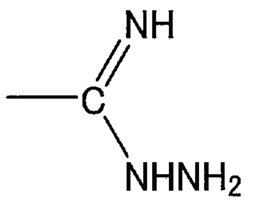

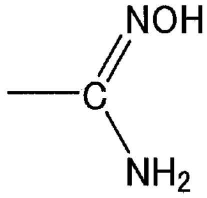

an amidrazone-based cross-linking agent represented by formula (43):

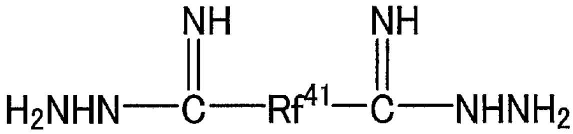

wherein $Rf^{41}$ is a perfluoroalkylene group having 1 to 10 carbon atoms; and a bisamidoxime-based cross-linking agent represented by formula (44):

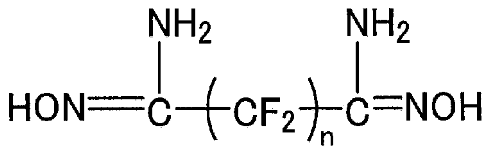

wherein n is an integer of 1 to 10, a compound represented by formula (45) : $HN{=}CR^{45}R^{46}$,
wherein $R^{45}$ is selected from the group consisting of H, $NH_2$,
and $NHR^{47}$, $R^{46}$ is selected from the group consisting of Ph, $SO_2H$, $NR^{48}R^{49}$, 2-pyridine, and $CH_{2CONH2}$, $R^{47}$ is selected from the group consisting of Ph, $NH_2$, and CN, $R^{48}$ is selected from the group consisting of H, NHPh, $CH_2CONH_2$, a linear alkyl group having 1 to 8 carbon atoms, and a branched alkyl group having 1 to 8 carbon atoms, and $R^{49}$ is selected from the group consisting of Ph, $COOC(CH_3)_3$, $NH_2$, $CH_2COOH$, $CSNH_2$, $CNHNH_3^+Cl^-$, p-phenyl CN,

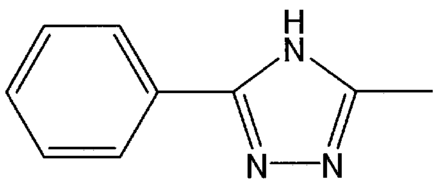

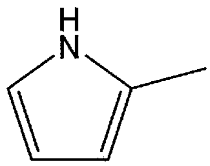

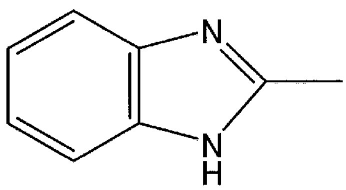

and COPh, and the like. These bisaminophenol-based cross-linking agents, bisaminothiophenol-based cross-linking agents, bisdiaminophenyl-based cross-linking agents, and the like have conventionally been used in crosslinking systems that use a cyano group as a crosslinking point, but these agents also react with a carboxyl group and an alkoxycarbonyl group to form an oxazole ring, a thiazole ring, and an imidazole ring to provide a crosslinked product.

Further, examples of the cross-linking agent include a cross-linking agent represented by formula (46): $X^{41}$-

$(CH_2)_n$-$R^{50}$-$(CH_2)_m$-$X^{41}$, wherein each $X^{41}$ is independently an alkyne group, a nitrile group, or $Y^{41}{}_pN_3$, wherein $Y^{41}$ is SO, $SO_2$, $C_6H_4$, or CO, and p is 0 or 1, n and m are independently integers of 1 to 4, and $R^{50}$ is selected from the group consisting of

i) a fluoroalkylene group having 3 to 10 carbon atoms,
ii) a fluoralkoxylene group having 3 to 10 carbon atoms,
iii) a substituted arylene group,
iv) an oligomer including a copolymerization unit of vinylidene fluoride and perfluoro(methylvinylether),
v) an oligomer including a copolymerization unit of vinylidene fluoride and hexafluoropropylene,
vi) an oligomer including a copolymerization unit of tetrafluoroethylene and perfluoro(methylvinylether), and
vii) an oligomer including a copolymerization unit of tetrafluoroethylene and a hydrocarbon olefin. This cross-linking agent is preferably used together with a perfluoroelastomer having a nitrile group, an azide group, a sulfonyl azide group, a carbonyl azide group, or an alkyne group. For example, the nitrile group of the perfluoroelastomer reacts with the azide group of the cross-linking agent to form a tetrazole ring to provide a crosslinked product.

Examples of a particularly preferred cross-linking agent include a compound having a plurality of 3-amino-4-hydroxyphenyl groups or 3-amino-4-mercaptophenyl groups, or a compound represented by formula (47):

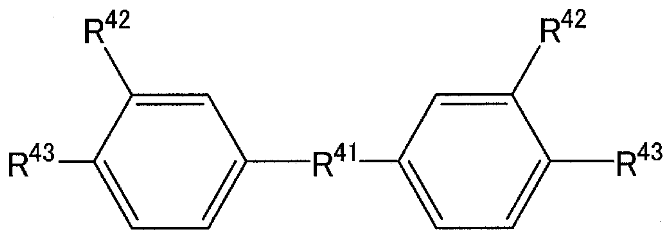

wherein $R^{41}$, $R^{42}$, and $R^{43}$ are as defined above. Specifically, examples include 2,2-bis(3-amino-4-hydroxyphenyl) hexafluoropropane (generic name: bis(aminophenol)AF), 2,2-bis(3-amino-4-mercaptophenyl)hexafluoropropane, tetraaminobenzene, bis-3,4-diaminophenylmethane, bis-3,4-diaminophenyl ether, 2,2-bis(3,4-diaminophenyl)hexafluoropropane, 2,2-bis[3-amino-4-(N-phenylamino)phenyl]hexafluoropropane, 2,2-bis[3-amino-4-(N-methylamino)phenyl]hexafluoropropane, 2,2-bis[3-amino-4-(N-ethylamino)phenyl]hexafluoropropane, 2,2-bis[3-amino-4-(N-propylamino)phenyl]hexafluoropropane, 2,2-bis[3-amino-4-(N-perfluorophenylamino)phenyl]hexafluoropropane, 2,2-bis[3-amino-4-(N-benzylamino)phenyl]hexafluoropropane, and the like.

Among these, from the viewpoints of heat resistance, steam resistance, amine resistance, and good crosslinkability, the cross-linking agent is preferably 2,2-bis[3-amino-4-(N-phenylamino)phenyl]hexafluoropropane.

The content of at least one selected from the group consisting of an inorganic nitride, an organotin compound, an ammonia-generating compound, and a cross-linking agent is preferably 0.05 to 10 parts by mass, more preferably 0.1 to 5.0 parts by mass, even more preferably 0.2 to 2.0 parts by mass, and particularly preferably 0.3 to 1.0 part by mass, based on 100 parts by mass of the perfluoroelastomer.

The composition can be prepared by mixing the above components by using a commonly used polymer processing machine, for example, an open roll, a Banbury mixer, a kneader, or the like. In addition, the composition can also be prepared by a method involving a closed mixer. The composition can be suitably used as a molding material for obtaining a crosslinked product by crosslinking and molding.

<Crosslinked product>

A crosslinked product can be obtained by curing the composition of the present disclosure. A crosslinked product of the present disclosure is excellent in terms of any of durability against $O_2$ plasma and durability against $CF_4$ plasma, and moreover, has small compression set even when used at high temperatures such as higher than 300°C.

In the crosslinked product of the present disclosure, the compression set measured after leaving the crosslinked product at 300°C for 70 hours at a compressibility of 25% is preferably 50% or less and more preferably 46% or less. The compression set can be calculated by leaving the crosslinked product at 300°C for 70 hours while being compressed at a compressibility of 25%, further leaving the crosslinked product at 70°C for 24 hours, then, releasing the compression, leaving the crosslinked product at 23°C for 30 minutes, and then measuring the thickness of the crosslinked product before and after compression.

The method for obtaining the crosslinked product from the composition may be a method involving forming the composition as a molding material to obtain a preform, and then crosslinking the preform. The method for obtaining the

preform from the composition may be a commonly used method, and can be performed by a known method such as a method involving heating and compressing the composition in a mold, a method involving pressing the composition into a heated mold, and a method involving extruding the composition with an extruder. In the case of an extruded product such as a hose and an electric wire, the crosslinked product can be obtained by heating and crosslinking the composition with steam or the like after extrusion.

The above crosslinking can be carried out in the order of primary crosslinking and secondary crosslinking. The primary crosslinking is preferably carried out at 150 to 250°C for 5 to 120 minutes, and more preferably at 170 to 200°C for 5 to 60 minutes. The crosslinking means may be a known crosslinking means, and an example may be press crosslinking.

The secondary crosslinking is preferably carried out at 200 to 320°C for 2 to 48 hours, and more preferably at 250 to 310°C for 5 to 24 hours. The temperature may be changed within this temperature range. The crosslinking means may be a known crosslinking means, and an example may be oven crosslinking. The crosslinking atmosphere may be under an atmospheric atmosphere or under an inert atmosphere such as nitrogen.

The crosslinked product of the present disclosure can be suitably used as a sealing material especially for semiconductor manufacturing apparatuses that require heat resistance, and, in particular, semiconductor manufacturing apparatuses where high density plasma irradiation is carried out. Examples of the sealing material include O-rings, square-rings, gaskets, packings, oil seals, bearing seals, and lip seals.

In addition, the molded article can also be used as various polymer products used in semiconductor manufacturing apparatus, such as diaphragms, tubes, hoses, various rubber rolls, and belts. The molded article can also be used as a coating material and a lining material.

Note that the semiconductor manufacturing apparatuses as used herein are not limited to those especially for manufacturing semiconductors, and encompass a wide variety of manufacturing apparatuses used in the semiconductor field where a high level of cleanliness is required, such as those for manufacturing liquid crystal panels and plasma panels, and examples are as follows.

(1) Etching apparatus

Dry etching apparatus
Plasma etching apparatus
Reactive ion etching apparatus
Reactive ion beam etching apparatus
Sputter etching apparatus
Ion beam etching apparatus
Wet etching apparatus
Ashing apparatus

(2) Cleaning apparatus dry etching cleaning apparatus UV/$O_3$ cleaning apparatus

Ion beam cleaning apparatus
Laser beam cleaning apparatus
Plasma cleaning apparatus
Gas etching cleaning apparatus
Extraction cleaning apparatus
Soxhlet extraction cleaning apparatus
High-temperature high-pressure extraction cleaning apparatus
Microwave extraction cleaning apparatus
Supercritical extraction cleaning apparatus

(3) Exposure apparatus

Stepper
Coater/developer

(4) Polishing apparatus
CMP apparatus
(5) Film forming apparatuses

CVD apparatus
Sputtering apparatus

(6) Diffusion/ion implantation apparatus

Oxidation diffusion apparatus
Ion implantation apparatus

The crosslinked product of the present disclosure delivers excellent performance as a sealing material for, for example, CVD apparatuses, plasma etching apparatuses, reactive ion etching apparatuses, ashing apparatuses, and excimer laser exposure machines.
While embodiments have been described above, it will be understood that various changes in form and detail can be made without departing from the gist and scope of the claims.

EXAMPLES

Next, embodiments of the present disclosure will now be described by way of Examples, but the present disclosure is not limited only to these Examples.
Various numerical values in the Examples were measured by the following methods.

(Compositional feature of perfluoroelastomer)

The compositional feature was determined by $^{19}$F-NMR analysis.

(Mooney viscosity of perfluoroelastomer)

The Mooney viscosity was measured using a Mooney viscometer MV2000E manufactured by Alpha Technologies Inc. at 170°C in accordance with JIS K 6300.

(BET specific surface area of filler (nitrogen adsorption method, water vapor adsorption method))

The BET specific surface area of the filler obtained by the nitrogen adsorption method was obtained by the BET flow method (single point) in which a nitrogen gas and a gas mixture (30% of nitrogen + 70% of helium) were used using a full automatic BET specific surface area analyzer Macsorb HM-1208 manufactured by Mountech **Co.,** Ltd.
The BET specific surface area of the filler obtained by the water vapor adsorption method was obtained by degassing the filler in a vacuum at 100°C for 3 hours, then, obtaining the adsorption isotherm of water vapor at 25°C using a high-precision gas/vapor adsorption measuring instrument BELLSORP-maxII manufactured by MicrotracBEL Corp., and analyzing this isotherm by the BET method.

(Proportion (water vapor/nitrogen))

The proportion (water vapor/nitrogen) was calculated from the BET specific surface areas of the filler measured above according to the following equation. A filler exhibiting a high proportion (water vapor/nitrogen) has a high degree of hydrophilicity.

Proportion (water vapor/nitrogen) (%) = (BET specific surface area obtained by water vapor adsorption method)/(BET specific surface area obtained by nitrogen adsorption method) $\times$ 100

(Graphite content (proportion of decrease in weight of filler))

The graphite content is obtained by heating the filler in the air up to 1,000°C at 10 °C/min using a simultaneous differential thermogravimetry measuring instrument STA7200 manufactured by Hitachi High-Tech Science Corporation and is a value when the weight has reduced most.

(Bulk density of filler)

The bulk density of the filler was calculated from the volume read from a scale of a 100 ml graduated cylinder (inner diameter: 28 mm) after 5 g of the powder was injected into the graduated cylinder and tapped 20 times from a height of 2 cm.

(Average particle size of filler)

The average particle size of the filler was calculated by average particle size (nm) = 6,000/(specific surface area ($m^2/g$) × true density ($g/cm^3$)) from the specific surface area (BET value) obtained using the full automatic BET specific surface area analyzer Macsorb HM-1208 manufactured by Mountech Co., Ltd. As the value of the true density, a true density of silicon carbide being 3.22 $g/cm^3$ was used.

(X-ray photoelectron spectroscopy)

The surface elemental analysis of the filler (SiC particles) was performed using an X-ray photoelectron spectrometer ESCA-3400 (manufactured by Shimadzu Corporation). Measurement was performed while the filler was pasted to carbon tape. The measurement conditions were Mg-Kα as the X-ray, 10 mA, 8 kV, and a measurement area of 3 mmφ. The peak separation processing was performed using data analysis software (Vison 2 (Vison Processing)). Background processing was performed by the linear method, and curve fitting by the nonlinear least-squares method was used for the peak separation. The structure of the spectrum was divided into a total of 4 peaks and fitted. Regarding the peak of C1s, the peak positions were set to 283.5 ± 0.5 eV, 284.8 ± 0.6 eV, 286.0 ± 0.5 eV, and 289.1 ± 0.5 eV in order from the small bonding energy. The peak of 283.5 ± 0.5 eV was regarded as the peak derived from SiC, and the peak of 284.8 ± 0.6 eV was regarded as the peak derived from graphite. The ratio (peak area of graphite/peak area of SiC) of the area of the peak belonging to graphite to the area of the peak belonging to SiC was calculated based on the results of the peak separation processing.

(Compression set)

The compression set was measured according to the method described in ASTM D395 or JIS K 6262. The O-rings produced in the Examples and Comparative Examples were compressed to a compressibility of 25% at normal temperature using a compression device (the O-rings with a thickness (cross-sectional diameter) of 3.5 mm were compressed to a thickness of 2.625 mm).

Next, the compression device to which the compressed O-ring was fixed was gently placed in an electric furnace and left to stand still at 300°C for 70 hours or 168 hours, and then the compression device was removed from the electric furnace. Thereafter, the compression device to which the compressed O-ring was fixed was placed statically in another electric furnace and left at 70°C for 24 hours. The O-ring was removed from the compression device, the removed O-ring was gently placed in a thermostatic chamber and left to stand still at 23°C for 30 minutes, and the thickness of the O-ring ($t_2$) was measured. The compression set was determined by the equation below.

$$\text{Compression set } (\%) = (t_0 - t_2)/(t_0 - t_1) \times 100$$

$t_0$: original thickness of O-ring (mm)
$t_1$: thickness of spacer (mm)
$t_2$: thickness of O-ring after compression test (mm)

In the above test, $t_0$ was 3.5 mm and $t_1$ was 2.625 mm.

(Plasma resistance (rate of decrease in weight of crosslinked product after plasma processing compared with before plasma processing))

The O-ring (P24 size) produced in each of Examples and Comparative Examples was placed statically in a process chamber. Plasma generated by using a radical generator was fed into the process chamber, and the O-ring was irradiated with the plasma under the following plasma irradiation conditions. The rates of decrease in weight by ICP plasma of $O_2$ and $CF_4$ were calculated from the masses of the O-ring before and after the plasma irradiation.

(Plasma irradiation conditions)

Radical generator: ICP high-density plasma device (RIE-101iPH manufactured by SAMCO)
Gas flow rate: 16 sccm
Power: 400 W

Pressure: 2.66 Pa
Irradiation time: 1 hour

(Plasma resistance (amount of particles generated))

The O-ring (P24 size) was irradiated with the plasma in the same manner as described above. The mass of the O-ring after the plasma irradiation was measured, next, the O-ring after the plasma irradiation was wiped off with a nonwoven fabric impregnated with ethanol to remove particles present on the surface, then, the O-ring was dried in an oven at 150°C for 1 hour, and the mass of the O-ring was measured again. The mass difference before and after the wiping corresponds to the mass of surface particles. The proportion (amount of particles generated) of the mass of the surface particles based on the mass before the wiping was calculated.
The following materials were used in the Examples and Comparative Examples.

Perfluoroelastomer:

TFE/PMVE/$CF_2$=$CFOCF_2CF(CF_3)OCF_2CF_2CN$ = 59.3/39.9/0.8 (mol%), Mooney Viscosity (ML (1 + 20) (170°C)) = 66

Cross-linking agent:

2,2-Bis[3-amino-4-(N-phenylamino)phenyl]hexafluoropropane [0144] Fillers
Fillers 1 to 4: Graphite-coated silicon carbide
Filler 5: Silicon carbide
Filler 6: Silicon carbide (DU A-1 manufactured by Showa Denko K.K.)

The physical properties of each filler are shown in Table 1.

[Table 1]

Table 1

| | | Filler 1 | Filler 2 | Filler 3 | Filler 4 | Filler 5 | Filler 6 |
|---|---|---|---|---|---|---|---|
| BET specific surface area (nitrogen adsorption method) | $m^2/g$ | 48.9 | 38.1 | 71.0 | 78.3 | 55.4 | 9.9 |
| BET specific surface area (water vapor adsorption method) | $m^2/g$ | 6.44 | 4.25 | 8.06 | 10.28 | 6.22 | 6.02 |
| Proportion (water vapor/nitrogen) | % | 13.17 | 11.16 | 11.35 | 13.13 | 11.20 | 61.10 |
| Graphite content | % by mass | 7.87 | 8.41 | 0 | 0.76 | 0 | 0 |
| Bulk density | $g/cm^3$ | 0.1 3 | 0.29 | 0.16 | 0.14 | 0.06 | 0.69 |
| Average particle size | nm | 38 | 49 | 26 | 24 | 34 | 189 |
| Area of peak derived from silicon carbide (SiC) | | 22 | 25 | 31 | 26 | 56 | 58 |
| Area of peak derived from graphite (C) | | 47 | 39 | 30 | 46 | 31 | 35 |
| Ratio (area (C)/area (SiC)) | | 2.14 | 1.56 | 0.97 | 1.77 | 0.55 | 0.60 |

Examples 1 to 4 and Comparative Examples 1 and 2

100 Parts by mass of the perfluoroelastomer, 15 parts by mass of the filler, and 0.8 parts by mass of the cross-linking agent were kneaded with an open rolll to prepare compositions.
The obtained composition was crosslinjed by pressing at 180°C for 30 minutes, and further subjected to oven crosslinking in an air oven at 290°C for 18 hours to produce an O-ring having a P24 size. Using the obtained O-ring, the

compression set, the rate of decrease in weight by ICP plasma, and the amount of particles generated were measured by the above-described methods. The results are shown in Table 2.

[Table 2]

Table 2

| | | Example 1 | Example 2 | Example 3 | Example 4 | Comparative Example 1 | Comparative Example 2 |
|---|---|---|---|---|---|---|---|
| Compositional feature of composition | | | | | | | |
| Perfluoroelastomer | parts by mass | 100 | 100 | 100 | 100 | 100 | 100 |
| Filler 1 | parts by mass | 15 | | | | | |
| Filler 2 | parts by mass | | 15 | | | | |
| Filler 3 | parts by mass | | | 15 | | | |
| Filler 4 | parts by mass | | | | 15 | | |
| Filler 5 | parts by mass | | | | | 15 | |
| Filler 6 | parts by mass | | | | | | 15 |
| Cross-linking agent | parts by mass | 0.8 | 0.8 | 0.8 | 0.8 | 0.8 | 0.8 |
| Compression set of crosslinked product | | | | | | | |
| 70h×300°C | | 36 | 39 | 45 | 46 | 56 | 28 |
| 168h×300°C | | 51 | - | 66 | 68 | 79 | 46 |
| Rate of decrease in weight of crosslinked product | | | | | | | |
| $O_2$ plasma | $g/m^2 \cdot min$ | 0.0693 | 0.0693 | 0 | 0 | 0.0070 | 0.0693 |
| $CF_4$ plasma | $g/m^2 \cdot min$ | 0.2426 | 0.2080 | 0.2519 | 0.2710 | 0.2773 | 0.2080 |
| Amount of particles generated in crosslinked product | | | | | | | |
| $O_2$ plasma | % by mass | 0.04 | 0.12 | 0.05 | 0.05 | 0.03 | 0.34 |
| $CF_4$ plasma | % by mass | 0.02 | 0.05 | 0.03 | 0.03 | 0 | 0.17 |

## Claims

**1.** A composition comprising:

a perfluoroelastomer, and
a filler,
wherein the filler contains silicon carbide and graphite, and a ratio (area (C)/area (SiC)) of an area (C) of a peak derived from graphite in the filler to an area (SiC) of a peak derived from silicon carbide in the filler as measured by X-ray photoelectron spectroscopy (XPS) is 0.7 or more.

2. The composition according to claim 1, wherein a BET specific surface area of the filler that is obtained by a nitrogen adsorption method is 15 to 200 $m^2/g$.

3. The composition according to claim 1 or 2,
wherein a proportion (water vapor/nitrogen) of a BET specific surface area of the filler that is obtained by a water vapor adsorption method to the BET specific surface area of the filler that is obtained by the nitrogen adsorption method is 1% to 60%.

4. The composition according to any one of claims 1 to 3, wherein the filler has a bulk density of 0.10 $g/cm^3$ or higher.

5. The composition according to any one of claims 1 to 4, wherein a content of the filler is 0.1 to 100 parts by mass based on 100 parts by mass of the perfluoroelastomer.

6. The composition according to any one of claims 1 to 5, further comprising at least one selected from the group consisting of an inorganic nitride, an organotin compound, an ammonia-generating compound, and a cross-linking agent.

7. A crosslinked product obtained by crosslinking the composition according to any one of claims 1 to 6.

8. The crosslinked product according to claim 7 that is a sealing material.

9. The crosslinked product according to claim 7 or 8, wherein a compression set measured after leaving the crosslinked product at 300°C for 70 hours at a compressibility of 25% is 50% or less.

**INTERNATIONAL SEARCH REPORT**

International application No. **PCT/JP2023/009871**

**A. CLASSIFICATION OF SUBJECT MATTER**

***C08L 27/12***(2006.01)i; ***C08K 3/04***(2006.01)i; ***C08K 3/28***(2006.01)i; ***C08K 3/34***(2006.01)i; ***C08K 5/57***(2006.01)i; ***C09K 3/10***(2006.01)i

FI: C08L27/12; C08K3/34; C08K3/04; C08K3/28; C08K5/57; C09K3/10 M

According to International Patent Classification (IPC) or to both national classification and IPC

**B. FIELDS SEARCHED**

Minimum documentation searched (classification system followed by classification symbols)

C08L27/00-27/24; C08K3/00-13/08; C09K3/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2008-1894 A (DAIKIN IND LTD) 10 January 2008 (2008-01-10) claims, paragraphs [0060]-[0064], examples | 1-9 |
| Y | JP 2007-84832 A (DAIKIN IND LTD) 05 April 2007 (2007-04-05) claims, paragraphs [0016]-[0025] | 1-9 |
| Y | JP 2012-509975 A (DAIKIN IND LTD) 26 April 2012 (2012-04-26) claims, paragraph [0077] | 1-9 |
| Y | WO 2005/082998 A1 (DAIKIN IND LTD) 09 September 2005 (2005-09-09) claims, paragraphs [0015], [0016] | 1-9 |
| Y | WO 2020/026909 A1 (DAIKIN IND LTD) 06 February 2020 (2020-02-06) claims, paragraphs [0084]-[0119] | 6 |
| A | JP 2015-124346 A (NIPPON VALQUA INDUSTRIES, LTD.) 06 July 2015 (2015-07-06) claims | 1-9 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **09 May 2023** | **23 May 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2023/009871**

**C. DOCUMENTS CONSIDERED TO BE RELEVANT**

| Category* | Citation of document, with indication, where appropriate, of the relevant passages | Relevant to claim No. |
|---|---|---|
| A | JP 2021-59689 A (DAIKIN IND LTD) 15 April 2021 (2021-04-15)<br>claims | 1-9 |
| P, A | WO 2022/230706 A1 (DAIKIN IND LTD) 03 November 2022 (2022-11-03)<br>claims | 1-9 |

Form PCT/ISA/210 (second sheet) (January 2015)

**INTERNATIONAL SEARCH REPORT**
**Information on patent family members**

International application No.
**PCT/JP2023/009871**

| Patent document cited in search report | Publication date (day/month/year) | Patent family member(s) | Publication date (day/month/year) |
|---|---|---|---|
| JP 2008-1894 A | 10 January 2008 | (Family: none) | |
| JP 2007-84832 A | 05 April 2007 | US 2003/0149159 A1<br>claims, paragraphs [0015]-[0024]<br>WO 2001/085848 A1<br>CN 1427874 A<br>KR 10-2003-0007581 A | |
| JP 2012-509975 A | 26 April 2012 | US 2012/0289641 A1<br>claims, paragraph [0077]<br>WO 2010/076889 A1<br>KR 10-2011-0087290 A | |
| WO 2005/082998 A1 | 09 September 2005 | US 2009/0023852 A1<br>claims, paragraphs [0015], [0016]<br>KR 10-2006-0114721 A | |
| WO 2020/026909 A1 | 06 February 2020 | US 2021/0292451 A1<br>claims, paragraphs [0125]-[0158]<br>KR 10-2021-0024137 A<br>CN 112543788 A | |
| JP 2015-124346 A | 06 July 2015 | US 2016/0319102 A1<br>claims<br>WO 2015/098337 A1<br>KR 10-2016-0104620 A<br>CN 105899600 A | |
| JP 2021-59689 A | 15 April 2021 | US 2022/0227909 A1<br>claims<br>CN 114502638 A<br>KR 10-2022-0066127 A | |
| WO 2022/230706 A1 | 03 November 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 03051999 A
- JP 2012509975 W
- JP 2007138287 A
- JP 2011213524 A
- WO 9724381 A
- JP 61057324 A
- JP 4081608 A
- JP 5013961 A
- JP 9111081 A
- JP 2059177 A
- JP 8120146 A


### Non-patent literature cited in the description


- **YA-LI LI** ; **TAKAMASA ISHIGAKI**. Synthesis and Structural Characterization of Core-Shell Si-SiC Composite Particles by Thermal Plasma In-Flight Carburization of Silicon Powder. *Journal of the Ceramic Society of Japan*, 2007, vol. 115 (11), 717-723